# EUROPEAN PATENT APPLICATION

(11) **EP 2 618 243 A1**
(43) Date of publication of application: **24.07.2013**
(21) Application number: 13000032.6
(22) Date of filing: 04.01.2013
(51) Int. Cl.: G06F 3/044

(54) **Touch panel**

(30) Priority: 05.01.2012 US 201261583205 P; 28.09.2012 US 201213629614
(71) Applicant: HTC Corporation, Taoyuan County 330 (TW)
(72) Inventor: Lo, Pi-Lin, 330 Taoyuan City (TW); Chen, Te-Mu, 330 Taoyuan City (TW); Hsueh, Yi-Fan, 330 Taoyuan City (TW); Lin, Yen-Cheng, 330 Taoyuan City (TW)
(74) Representative: Emde, Eric

(57) **Abstract**

A touch panel includes a substrate, conductive lines, conductive pads, connecting lines, ground lines and dummy pads. The substrate has a first surface. The conductive lines and the ground lines are arranged abreast on the first surface and extended along a first direction. The conductive pads and the dummy pads are on the first surface. N conductive pads are between two adjacent conductive lines. The connecting lines are connected to the conductive pads. 1-N conductive pads located between an i-th conductive line to a (i+1)-th conductive line are connected to 1-N connecting lines. 1-N connecting lines are between the 1-N conductive pads and the (i+1)-th conductive line. All of the N-th connecting lines are electrically connected to each other. An i-th ground line is between the (i+1)-th conductive line and the corresponding 1-N connecting lines. The dummy pads are between the i-th conductive line and the corresponding 1-N conductive pads.

## Description

### CROSS-REFERENCE TO RELATED APPLICATION

This application claims the priority benefits of U.S. provisional application serial no. 61/583,205, filed on January 5, 2012. The entirety of the above-mentioned patent applications is hereby incorporated by reference herein and made a part of this specification.

### BACKGROUND OF THE INVENTION

### Field of the Invention

The application relates to a touch panel, and more particularly, to a capacitive touch panel.

### Description of Related Art

As information technology, wireless mobile communication and information appliances have been rapidly developed and applied, to achieve more convenience, more small volume, light weight and more user-friendly designs, various information products have changed from using conventional input devices such as key boards or mice to using touch panels.

Based on different sensing types, a touch sensing panel can be generally categorized into a resistive touch sensing panel, a capacitive touch sensing panel, an optical touch sensing panel, an acoustic-wave touch sensing panel, and an electromagnetic touch sensing panel. In comparison to other touch panels, the capacitive touch sensing panel is characterized by short response speed, favorable reliability, high definition, and so on. Therefore, the capacitive touch panel is widely used in the electronic products.

### SUMMARY OF THE INVENTION

The present application is directed to a touch panel capable of enhancing quality of signal transmission and sensing sensitivity.

The application provides a touch panel, including a substrate, a plurality of conductive lines, a plurality of conductive pads, a plurality of connecting lines, a plurality of ground lines and a plurality of dummy pads. The substrate has a first surface. The conductive lines are arranged abreast on the first surface and respectively extended along a first direction. The conductive pads are disposed on the first surface, in which N conductive pads are present between two adjacent conductive lines. The connecting lines are disposed on the first surface and respectively connected to the conductive pads. In which, 1 to N conductive pads located between an i-th conductive line to a (i+1)-th conductive line are respectively connected to 1 to N connecting lines. The 1 to N connecting lines are arranged abreast and located between the 1 to N conductive pads and the (i+1)-th conductive line. j and n are positive integers. The ground lines are arranged abreast on the first surface and respectively extended along a first direction, in which an i-th ground line is located between the (i+1)-th conductive line and the corresponding 1 to N connecting lines. The dummy pads are disposed on the first surface and located between the (i+1)-th conductive line and the corresponding 1 to N connecting pads.

In view of above, in order to adjust a distance between the conductive lines and the corresponding conductive pads, the application is directed to dispose a plurality of dummy pads without participating circuitry layout to be located between the conductive lines and the corresponding conductive pads on the touch panel, so as to reduce parasitic capacitance generated between the conductive lines and the corresponding conductive pads. Further, by disposing the dummy pads between the conductive lines and the corresponding conductive pads, the uneven transmittance (caused by the distance between the conductive lines and the corresponding conductive pads being too long) while disposing the touch panel on the backlight module may also further be reduced. Moreover, the application is further directed to dispose ground lines between the conductive lines and the corresponding connecting lines, so as to reduce poor signal transmission due to interference between two adjacent conductive lines which are arranged abreast.

To make the above features and advantages of the invention more comprehensible, several embodiments accompanied with drawings are described in detail as follows.

### BRIEF DESCRIPTION OF THE DRAWINGS

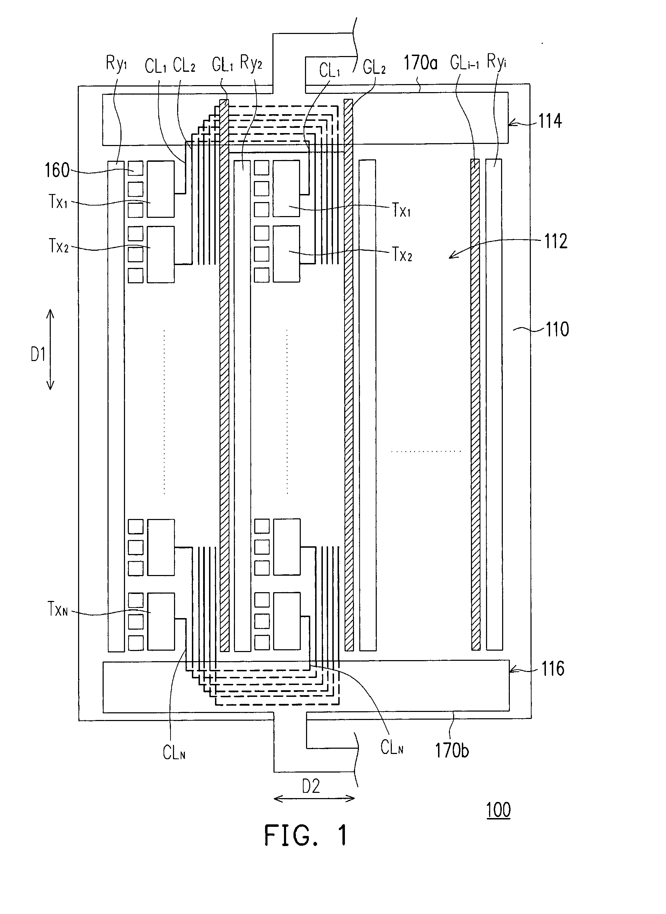

Fig. 1 is a schematic top view of a touch panel according to an embodiment of the invention.

### DESCRIPTION OF THE EMBODIMENTS

Fig. 1 is a schematic top view of a touch panel according to an embodiment of the invention. Referring to Fig. 1, a touch panel 100 of the present embodiment includes a substrate 110, a plurality of conductive lines Ry₁ to Ryᵢ, a plurality of conductive pads Tx₁ to Tx_{N}, a plurality of connecting lines CL₁ to CL_{N}, a plurality of ground lines GL₁ to GL_{N} and a plurality of dummy pads 160. The conductive lines Ry₁ to Ryᵢ are arranged abreast on a first surface 112 of the substrate 110 and respectively extended along a first direction D1. The conductive pads Tx₁ to Tx_{N} are also disposed on the first surface 112. More specifically, the plurality of conductive pads Tx₁ are arranged along a second direction D2 and a first sensing string is formed by cascading the plurality of connecting lines CL₁. Similarly, the conductive pads Tx₂,..., Tx_{N} adopt the same layout for respectively forming 2-N sensing series along the second direction D2. In which the first direction D1 is vertical to the second direction D2. Herein, in the touch panel 100, amounts of the conductive lines Ry₁ to Ryᵢ may equal to or not equal to amounts of the conductive pads Tx₁ to Tx_{N}, the amounts of the conductive lines Ry₁ to Ryᵢ and the amounts of the conductive pads Tx₁ to Tx_{N} are not particularly limited in the application.

Accordingly, the conductive lines Ry₁ to Ryᵢ and the conductive pads Tx₁ to Tx_{N} are alternately disposed in order to accomplish a sensing process in terms of planes. When a user touches the touch panel 100 with a finger, the conductive lines Ry₁ to Ryᵢ and the conductive pads Tx₁ to Tx_{N} may cause variation in capacitance on a contact position where the finger touches. The touch panel 100 may calculate a coordinate of the contact position using said variation in capacitance and transmit the coordinate to an electronic device connected thereto. Generally, if the conductive lines Ry₁ to Ryᵢ and the conductive pads Tx₁ to Tx_{N} are alternately disposed on different planes, the touch panel 100 may generate a visual difference. Therefore, in the present embodiment, by disposing the conductive lines Ry₁ to Ryᵢ and the conductive pads Tx₁ to Tx_{N} on the same plane, a thickness of the touch panel 100 may be reduced and a transmittance thereof may be increased, accordingly. As a result, when the touch panel 100 is integrated with a display panel as a display having a touch-control function, the touch panel 100 may have better optical properties.

Two adjacent conductive lines Ry₁ and Ry₂ and devices therebetween as illustrated in Fig. 1 are provided hereinafter to further describe a structure arrangement in the touch panel 100. However, such structure arrangement is not only adapted for being disposed between the conductive lines Ry₁ and Ry₂, but also adapted for applying extendedly to the touch panel 100 entirely.

As shown in Fig. 1, N conductive pads Tx₁ to Tx_{N} are presented between the two adjacent conductive lines Ry₁ and Ry₂. The connecting lines CL₁ to CL_{N} are disposed on the first surface 112 and respectively connected to the conductive pads Tx₁ to Tx_{N}. In other words, the conductive pads Tx₁ to Tx_{N} located between the conductive lines Ry₁ and Ry₂ are respectively connected to the connecting lines CL₁ to CL_{N}. The connecting lines CL₁ to CL_{N} are arranged abreast and located between the conductive pads Tx₁ to Tx_{N} and the conductive line Ry₂, and all connecting lines CL₁ on the substrate 110 are electrically connected to each other to form the first sensing series by connecting with all pads Tx₁ on the second direction D2. Similarly, the connecting lines CL₂,..., CL_{N} may adopt the same layout for respectively forming the 2 to N sensing series. The connecting lines CL₁ to CL_{N} are configured for transmitting a sensing signal generated by the conductive lines Ry₁ to Ryᵢ and the conductive pads Tx₁ to Tx_{N} to a control circuit and transmit a control signal outputted from the control circuit to the conductive lines Ry₁ to Ryᵢ and the conductive pads Tx₁ to Tx_{N}.

Accordingly, the connecting lines CL₁ to CL_{N} may extend to a bridge area 114 of the touch panel 100, and the connecting lines CL₁ to CL_{N} are electrically connected along the second direction D2 through bridging devices on the bridge area 114 for respectively forming said 1 to N sensing series. In the present embodiment, the touch panel 100 includes a first bridge area 114 and a second bridge area 116 respectively located one two opposite sides of the substrate 110. The touch panel 100 further includes a first flexible printed circuit board 170a and a second flexible printed circuit board 170b respectively disposed on the first bridge area 114 and the second bridge area 116, and the first flexible printed circuit board 170a and the second flexible printed circuit board 170b are electrically connected to each other. A portion of the connecting lines CL₁ to CL_{N} are electrically connected to the first flexible printed circuit board 170a, whereas another portion for the connecting lines CL₁ to CL_{N} are electrically connected to the second flexible printed circuit board 170b. According to such configuration, since all connecting lines CL₁ to CL_{N} are respectively connected to the bridge areas 114 and 116 on two opposite sides of the substrate 110, wiring space on the touch panel 100 may be greatly reduced, thereby reducing overall size of the touch panel 100. Nonetheless, the application is not limited thereto. According to other embodiments of the invention, the connecting lines CL₁ to CL_{N} may also be connected to a same side of the substrate 110. Such configuration may be accomplished, for example, by disposing a flexible printed circuit board on a bridge area of the touch panel, in which the bridge area is located on a side of the substrate 110, and the connecting lines CL₁ to CL_{N} are electrically connected to the flexible printed circuit board.

In the present embodiment, a material of the connecting lines CL₁ to CL_{N} may be conductive transparent materials such as Indium Tin Oxide (ITO), Indium Zinc Oxide (IZO), Al doped zinc oxide (AZO) or Indium Oxide or a combination thereof. Practically, according to the present embodiment, the conductive lines Ry₁ to Ryᵢ have an identical width and the conductive pads Txᵢ to Tx_{N} also have an identical size. However, the application is not limited thereto. According to other embodiments of the invention, the conductive pads Tx₁ to Tx_{N} may also have a different size, which may be adjusted based on requirements such as contact area (such as size of the finger) or sensing resolution.

Accordingly, in the present embodiment, the ground lines GL₁ to GLᵢ₋₁ are arranged abreast on the first surface 112 and extended along the first direction D1. Particularly in the present embodiment, the ground lines GL₁ to GLᵢ₋₁ are respectively disposed between the conductive lines and connecting lines adjacent thereto, so as to reduce poor sensing sensitivity due to electrical interference generated by the conductive lines and adjacent connecting lines. As shown in Fig. 1, the ground line GL₁ is located between the conductive line Ry₂ and the corresponding connecting lines CL₁ to CL_{N}, so as to avoid interference of the conductive line Ry₂ the corresponding connecting lines CL₁ to CL_{N}.

Moreover, when the conductive lines Ry₁ to Ryᵢ and the corresponding conductive pads Tx₁ to Tx_{N} are too close to each other, parasitic capacitance generated therebetween may affect normal operation of the touch panel. Therefore, a proper distance is required to space apart the conductive lines Ry₁ to Ryᵢ and the corresponding conductive pads Tx₁ to Tx_{N}. However, in the case where the distance between the conductive lines Ry₁ to Ryᵢ and the corresponding conductive pads Tx₁ to Tx_{N} is increased, the touch panel 100 may face problems such as difficulty in fabricating process and an uneven transmittance. Accordingly, in the present embodiment, dummy pads 160 are disposed between the conductive lines and the corresponding 1 to N conductive pads to adjust the distance between the conductive lines Ry₁ to Ryᵢ and the corresponding conductive pads Tx₁ to Tx_{N}, so that touch panel 100 may operate normally, and degree of uniformity in transmittance of the touch panel 100 may also be maintained. Herein, the dummy pads 160 are only used to space apart the conductive lines Ry₁ to Ryᵢ and the corresponding conductive pads Tx₁ to Tx_{N} without participating the circuitry layout.

In view of above, in order to adjust a distance between the conductive lines and the corresponding conductive pads, the application is directed to dispose a plurality of dummy pads without participating circuitry layout to be located between the conductive lines and the corresponding conductive pads on the touch panel, so as to reduce parasitic capacitance generated between the conductive lines and the corresponding conductive pads. Further, by disposing the dummy pads between the conductive lines and the corresponding conductive pads, the uneven transmittance (caused by the distance between the conductive lines and the corresponding conductive pads being too long) while disposing the touch panel on the backlight module may also further be reduced. Moreover, the application is further directed to dispose ground lines between the conductive lines and the corresponding connecting lines, so as to reduce poor signal transmission due to interference between two adjacent conductive lines which are arranged abreast.

Although the invention has been described with reference to the above embodiments, it is apparent to one of the ordinary skill in the art that modifications to the described embodiments may be made without departing from the spirit of the invention. Accordingly, the scope of the invention will be defined by the attached claims not by the above detailed descriptions.

## Claims

1. A touch panel, comprising:
a substrate having a first surface;
a plurality of conductive lines arranged abreast on the first surface and respectively extended along a first direction;
a plurality of conductive pads disposed on the first surface, wherein N conductive pads are present between two adjacent conductive lines;
a plurality of connecting lines disposed on the first surface and respectively connected to the conductive pads, wherein 1 to N conductive pads located between an i-th conductive line and a (i+1)-th conductive line are respectively connected to 1 to N connecting lines, the 1 to N connecting lines are arranged abreast and located between the 1 to N conductive pads and the (i+1)-th conductive line, and all of j-th connecting lines on the substrate are electrically connected to each other, wherein j and i are positive integers;
a plurality of ground lines arranged abreast on the first surface and respectively extended along a first direction, wherein an i-th ground line is located between the (i+1)-th conductive line and the corresponding 1 to N connecting lines; and
a plurality of dummy pads disposed on the first surface and located between the (i+1)-th conductive line and the corresponding 1 to N connecting pads;

2. The touch panel of claim 1, wherein the 1 to N connecting lines are extended to the same side of the substrate.

3. The touch panel of claim 2, further comprising a flexible printed circuit board disposed on the same side of the substrate, and the 1 to N connecting line are respectively electrically connected to the flexible printed circuit board.

4. The touch panel of claim 1, wherein a portion of the 1 to N connecting lines is extended to a first side of the substrate and another portion of the 1 to N connecting lines is extended to a second side opposite to the first side of the substrate.

5. The touch panel of claim 4, further comprising a first flexible printed circuit board and a second flexible printed circuit board, the first flexible printed circuit board and the second flexible printed circuit board are electrically connected to each other and respectively disposed on the first side of the substrate and the second side of the substrate opposite to the first side, a portion of the 1 to N connecting lines is electrically connected to the first flexible printed circuit boards, and a remaining portion of the 1 to N connecting lines is electrically connected to the second flexible printed circuit board.

6. The touch panel of claim 1, wherein a material of the connecting lines comprises conductive transparent materials.

7. The touch panel of claim 1, wherein the conductive lines have an identical width.

8. The touch panel of claim 1, wherein the conductive pads have an identical size.

9. The touch panel of claim 1, wherein the conductive pads have different sizes.
